# EUROPÄISCHE PATENTSCHRIFT

(11) **EP 3 475 542 B1**
(45) Veröffentlichungstag und Bekanntmachung des Hinweises auf die Patenterteilung: **05.08.2026**
(21) Anmeldenummer: 17731103.2
(22) Anmeldetag: 12.06.2017
(51) Int. Cl.: A62C 2/06, F16L 5/04, B32B 3/04, B32B 3/26, B32B 3/30, B32B 5/02, B32B 5/18, B32B 5/24, B32B 7/04, B32B 7/08, B32B 7/12, B32B 15/04, F01N 3/28

(54) **BRANDSCHUTZELEMENT ZUM ABDICHTEN VON DURCHGANGSÖFFNUNGEN IN BAUELEMENTEN**
FIRE PROTECTION ELEMENT FOR SEALING HOLES IN COMPONENTS
ÉLEMENT IGNIFUGE DESTINE A L'ETANCHEITE D'OUVERTURES DE PASSAGE DANS DES ELEMENTS DE CONSTRUCTION

(30) Priorität: 24.06.2016 EP 16176114
(43) Veröffentlichungstag der Anmeldung: 01.05.2019
(73) Patentinhaber: Hilti Aktiengesellschaft, 9494 Schaan (LI)
(72) Erfinder: PAETOW, Mario, 86859 Igling (DE); MÜNZENBERGER, Herbert, 65191 Wiesbaden (DE); SEMLER, Rudolf, 86931 Prittriching (DE); ZIPFEL, Horst, 86899 Landsberg am Lech (DE)
(74) Vertreter: Hilti Aktiengesellschaft Corporate Intellectual Property
(86) Internationale Anmeldenummer: PCT/EP2017/064227
(87) Internationale Veröffentlichungsnummer: WO 2017/220357

(56) Entgegenhaltungen:
- EP-A2- 2 570 708
- WO-A1-2013/145790
- CN-U- 201 696 812
- JP-A- 2008 184 896
- US-A1- 2012 251 762
- US-A1- 2015 285 426

## Beschreibung

### Technisches Gebiet

Die Erfindung betrifft die Abdichtung von Durchgangsöffnungen in Bauelementen, wie z.B. Gebäudebauteilen, durch die Leitungen hindurchgeführt sind. Weiterhin betrifft die vorliegende Erfindung Brandschutzelemente mit intumeszierendem Material.

### Technischer Hintergrund

Beim Verlegen von Leitungen, wie z.B. Rohrleitungen, elektrische Leitungen und dergleichen, werden diese durch Durchgangsöffnungen in Bauelementen, insbesondere Gebäudebauteilen, wie Wände und Decken, geführt. Um den Durchtritt von Feuer und Rauchgasen im Brandfall zu verhindern, werden zwischen Innenwänden der Durchgangsöffnungen und den hindurchgeführten Leitungen Dichtungsmaterialien eingebracht. Die Dichtungsmaterialien werden in der Regel mit intumeszierendem Material versehen oder aus diesem gebildet, so dass sich das Material bei Einwirkung von Wärme, wie sie im Brandfall auftritt, ausdehnt und dadurch die Leitung abdrückt und die Durchgangsöffnung in dem Bauelement verschließt.

Dokumente US 2012/251762 A1 und EP 2 570 708 A2 offenbaren Brandschutzelemente für Rohrleitungen.

Ein Problem der in die Zwischenräume zwischen den Rohrleitungen und den Durchgangsöffnungen eingebrachten Brandschutzelemente besteht darin, dass die Expansion der intumeszierenden Materialien so ungerichtet wirkt, dass ein Großteil des expandierten Materials seitlich aus der Durchgangsöffnung herausgedrückt wird und somit nur ein geringer Druck auf die Leitung ausgeübt wird. Zudem ist das aus der Durchgangsöffnung herausgedrückte Material ungeschützt und daher mechanischen Belastungen ausgesetzt, wie beispielsweise einem Löschwasserstrahl oder dergleichen, so dass der herausgedrückte Anteil des expandierten intumeszierenden Materials im Brandfall nicht beständig ist.

Weiterhin ist durch das seitliche Herausdrücken des Materials aus der Durchgangsöffnung die Geschwindigkeit des Zusammendrückens der durchgeführten Leitung reduziert, so dass eine geforderte Verschlusszeit im Brandfall gegebenenfalls nicht erreicht wird.

Es ist Aufgabe der vorliegenden Erfindung, ein Bandschutzelement zur Verfügung zu stellen, mit dem ein Zwischenraum zwischen einer Innenfläche einer Durchgangsöffnung und einer hindurchgeführten Leitung abgedichtet werden kann, und wodurch erreicht wird, dass intumeszierendes Material des Brandschutzelementes beim Ausdehnen in verringertem Maß aus dem Zwischenraum herausgedrückt wird und folglich die hindurchgeführte Leitung in verstärktem Maße abdrückt.

### Offenbarung der Erfindung

Diese Aufgabe wird durch das Brandschutzelement nach Anspruch 1 sowie durch die Anordnung des Brandschutzelements in einem Zwischenraum zwischen einem Bauelement und einer Leitung gemäß Anspruch 12 gelöst.

Weitere Ausgestaltungen sind in den abhängigen Ansprüchen angegeben.

Gemäß einem ersten Aspekt ist ein streifenförmiges Brandschutzelement für eine durch ein Bauelement hindurchgeführte Leitung vorgesehen, umfassend:
- eine flächige Innenlage mit einem intumeszierenden Material;
- eine Verstärkungslage aus einem Faserverbundmaterial, die auf mindestens einer ersten Flachseite der Innenlage aufgebracht ist und sich in der Längsrichtung des Brandschutzelements erstreckt, wobei die Verstärkungslage die Innenlage zumindest teilweise in einer Breitenrichtung überdeckt, wobei die Verstärkungslage um mindestens einen der seitlichen Ränder der Innenlage auf eine zweite Flachseite umgeschlagen ist, wobei das Brandschutzelement entlang seiner Längsrichtung umgeklappt ist, um eine Umklappkante auszubilden, die außenseitig durch die Verstärkungslage verstärkt ist, und wobei die Verstärkungslage auf der ersten Seite zumindest im ersten Dichtungsabschnitt mit in Breitenrichtung verlaufenden Materialschwächungsbereichen versehen ist, und wobei im ersten Dichtabschnitt die Verstärkungslage beidseitig aufgebracht ist.

Eine Idee des obigen Brandschutzelements besteht darin, eine Innenlage aus intumeszierendem Material zumindest über einen Teil ihrer Breite mit einer Verstärkungslage aus einem Verstärkungsmaterial zu versehen, so dass durch Umbiegen im Bereich der Verstärkungslage eine Umklappkante des Brandschutzelementes ausgebildet wird, die die Verstärkungslage außenseitig umgibt.

Beim Einsetzen des Brandschutzelements in einen Zwischenraum zwischen einem Bauelement und einer Leitung zeigt die Umklappkante des Brandschutzelements aus dem Zwischenraum nach außen. Wenn sich im Brandfall das intumeszierende Material der Innenschicht ausdehnt, werden die die Umklappkante umgebenden Bereiche der Verstärkungslage gegen eine Mantelfläche der Leitung und eine Innenmantelfläche der Durchgangsöffnung gedrückt und die Umklappkante des Brandschutzelements somit gegen eine Bewegung in axialer Richtung der hindurchgeführten Leitung reibschlüssig fixiert. Dadurch wird bei sich weiter ausdehnendem intumeszierendem Material ein Austreten des intumeszierenden Materials aus dem Zwischenraum zwischen dem Bauelement und der Leitung heraus durch die durch Klemmen fixierte Verstärkungslage verhindert und dadurch ein erhöhter Druck in Richtung der Leitung ausgeübt.

Weiterhin ist die Verstärkungslage um mindestens einen der seitlichen Ränder der Innenlage auf eine zweite Flachseite umgeschlagen.

Insbesondere kann die Verstärkungslage die zweite Flachseite der Innenlage teilweise überdecken.

Es kann vorgesehen sein, dass das Faserverbundmaterial der Verstärkungslage eine technische Faser aus der Gruppe bestehend aus Glasfaser, Keramikfaser, Carbonfaser, Polyamidfaser, Metallfaser, Aramidfaser, Borfaser, Naturfaser, Steinfaser und Mischungen davon, umfasst.

Weiterhin kann das Faserverbundmaterial der Verstärkungslage ein Glasfasermaterial, insbesondere ein Glasfaservlies, Glasfasergelege, Glasfasergewirke oder ein Glasfasergewebe sein.

Gemäß der Erfindung weist die Verstärkungslage auf wenigstens der ersten Flachseite einer Seite Materialschwächungsbereiche auf, die sich in Breitenrichtung erstrecken.

Insbesondere können die Materialschwächungsbereiche durch Einschnitte, Prägelinien oder Perforierungen gebildet sein. Die Materialschwächungsbereiche können in Bereichen der Verstärkungslage vorgesehen sein, die nicht um die Umklappkanten der Innenlage umgeschlagen sind. Auf diese Weise wird erreicht, dass im Brandfall bei Ausdehnung des intumeszierenden Materials die Materialschwächungsbereiche ein Austreten des sich ausdehnenden intumeszierenden Materials ermöglichen und somit dieses nicht an einer Ausdehnung in Querrichtung bezüglich der axialen Richtung der Durchgangsöffnung durch das Bauelement gehindert wird.

Weiterhin kann das intumeszierende Material ein intumeszierender Schaum, eine intumeszierende Beschichtung oder ein intumeszierender Streifen sein.

Die Verstärkungslage kann durch Klammern, Kleben, Rakeln, Nieten, Walzen, Schweißen, Extrudieren oder Formschluss mit der Innenschicht verbunden sein. Insbesondere kann die Verstärkungslage auf eine Flachseite der Innenlage aufgerakelt sein. Weiterhin kann Verstärkungslage wenigstens einlagig ausgebildet sein.

Gemäß einer Ausführungsform kann das Faserverbundmaterial eine Temperaturbeständigkeit bis mindestens 500°C haben. Darüber hinaus kann in der Innenlage ein Metallstreifen vorgesehen sein.

Das Brandschutzelement ist entlang seiner Längsrichtung umgeklappt, um eine Umklappkante auszubilden, die außenseitig durch die Verstärkungslage verstärkt ist. Die Umklappkante verläuft damit in Längsrichtung des Brandschutzelements und kann daher in beliebige Längen zugeschnitten werden.

Gemäß einem weiteren Aspekt ist eine Anordnung des obigen Brandschutzelementes in einer Durchgangsöffnung eines Bauelements vorgesehen, durch die eine Leitung geführt ist, wobei das Brandschutzelement eine Stirnseite der Durchgangsöffnung so verschließt, dass die Umklappkante nach außen weist und Bereiche der Verstärkungslage an der Mantelfläche der Durchgangsöffnung und der Mantelfläche der Leitung anliegen.

### Kurzbeschreibung der Zeichnungen

Ausführungsformen werden nachfolgend anhand der beigefügten Zeichnungen näher erläutert. Es zeigen:
- Figur 1: eine perspektivische Darstellung eines Brandschutzelements zum Einsatz in einem Zwischenraum zwischen einem Bauelement und einer Leitung;
- Figur 2: eine Querschnittsdarstellung des Brandschutzelements der Figur 1 in einem aufgeklappten Zustand; und
- Figur 3: eine Anordnung von Brandschutzelementen in einem Zwischenraum zwischen einem Bauelement und einer hindurchgeführten Leitung.

### Beschreibung von Ausführungsformen

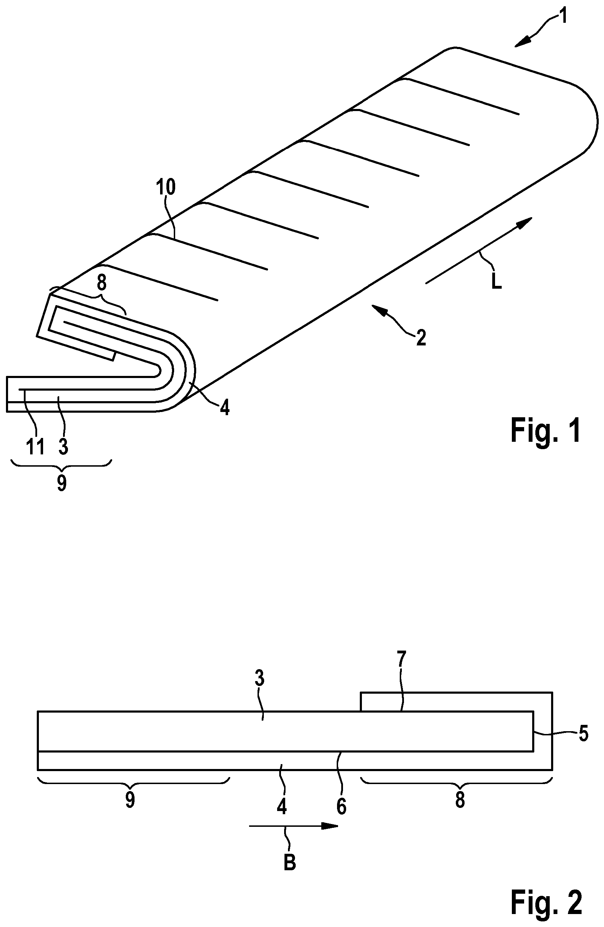

In Figur 1 ist eine perspektivische Darstellung eines Abschnitts eines streifenförmigen Brandschutzelements 1 dargestellt, das sich in einer Längsrichtung L erstreckt und als Rollenmaterial, das in die benötigte Länge zugeschnitten werden kann, bereitgestellt werden kann.

Das Brandschutzelements 1 ist mit einer Umklappkante 2 versehen, die fest vorgesehen sein kann oder kurz vor der Montage durch entsprechendes Umklappen des Brandschutzelements 1 entlang seiner Längsrichtung ausgebildet werden kann. Das Brandschutzelement 1 weist eine expandierbare Innenlage 3 auf, die ganz oder teilweise aus einem intumeszierenden Material ausgebildet ist. Das intumeszierende Material hat die Eigenschaft, sich bei Einwirken von Wärme, insbesondere bei Brandwärme, auszudehnen und freies Volumen auszufüllen. Die Innenlage 3 kann mit einem intumeszierenden Schaum, einer intumeszierenden Beschichtung oder mit einer intumeszierenden Materiallage ausgebildet sein.

Weiterhin kann in der Innenlage 3 ein Metallstreifen 11 vorgesehen sein, der sich in Längsrichtung L und sich teilweise oder ganz über die Breite B der Innenlage 3 erstreckt, um im Brandfall eine gute Wärmeleitung zu nicht unmittelbar der Wärmeeinwirkung von Brandgasen oder Flammen ausgesetzten Bereichen des Brandschutzelementes 1 zu erreichen. Auf diese Weise kann bei lokaler Wärmeeinwirkung auch in von dem Wärmeeintrag entfernten Bereichen des Brandschutzelementes 1 eine Volumenänderung des intumeszierenden Materials erreicht werden.

Die Innenlage 3 ist zumindest einseitig von einer Verstärkungslage 4 überdeckt, die aus einem verstärkenden Material ausgebildet ist. Die Verstärkungslage 4 ist an einer Flächenseite der Innenlage 3 befestigt und insbesondere durch Klammern, Kleben, Nieten, Walzen, Schweißen, Extrudieren oder Formschluss angebracht. Insbesondere kann die Verstärkungslage 4 auf der Flachseite der Innenlage 3 aufgerakelt sein.

Das verstärkende Material der Verstärkungslage 4 kann ein Faserverbundmaterial sein oder aufweisen und eine oder mehrere der folgenden technischen Fasern enthalten: Glasfaser, Keramikfaser, Carbonfaser, Polyamidfaser, Metallfaser, Aramidfaser, Borfaser, Naturfaser, Steinfaser und dergleichen. Das Faserverbundmaterial kann weiterhin ein Glasfasermaterial, insbesondere ein Glasfaservlies, Glasfasergelege, Glasfasergewirke oder ein Glasfasergewebe sein.

Vorzugsweise weist das Faserverbundmaterial eine Temperaturbeständigkeit auf, so dass es bei einer Temperatur, bei der eine maximale Volumenänderung des intumeszierenden Materials erreicht wird, weiterhin eine hohe Reißfestigkeit aufweist bzw. keine bezüglich Normaltemperatur (z.B. 20°C) reduzierte Reißfestigkeit aufweist. Das verstärkende Material kann beispielsweise eine Temperaturbeständigkeit von mindestens 500°C aufweisen.

Die Innenlage 3 kann umgebogen sein, um die Umklappkante 2 auszubilden, die sich entlang der Längsrichtung L des Brandschutzelementes 1 erstreckt. Die Umklappkante 2 bildet so eine Kante des Brandschutzelementes 1, die von der Verstärkungslage 4 außenseitig bedeckt ist.

Im vorliegenden Ausführungsbeispiel überdeckt, wie in Figur 2 gezeigt, die Verstärkungslage 4 die Innenlage 3 auf einer ersten Seite 6 über deren gesamte Breite B vollständig und darüber hinaus eine sich daran anschließende seitliche Kante 5 der Innenlage 3 und einen Abschnitt einer der ersten Seite 6 gegenüberliegenden zweiten Seite 7 der Innenlage 3, der sich an die seitliche Kante 5 anschließt. Dadurch wird ein Brandschutzelement 1 gebildet, das bezüglich seiner Breite einen ersten Dichtabschnitt 8 und einen zweiten Dichtabschnitt 9 aufweist, die beim Umklappen in einen Gebrauchszustand, wie in Figur 1 gezeigt, im Wesentlichen zwei Schenkel eines U-förmigen Querschnitts ausbilden können.

Die Verstärkungslage 4 ist auf der ersten Seite 6 zumindest im ersten Dichtungsabschnitt 8 mit in Breitenrichtung B verlaufenden Materialschwächungsbereichen 10 versehen, die in Form von Einschnitten, Prägelinien oder Perforierungen ausgebildet sein können. Die Materialschwächungsbereiche 10 können länglich sein oder andere geometrische Formen aufweisen.

Wenn im Brandfall das intumeszierende Material expandiert, ermöglichen diese Materialschwächungsbereiche 10 ein Aufreißen und Austreten des sich ausdehnenden intumeszierenden Materials der Innenlage 3, so dass sich das Brandschutzelement 1 im Gebrauchszustand quer zur Längsrichtung L verbreitert und Druck auf eine Fläche ausübt, an der die Außenseite des durch den ersten Dichtabschnitts 8 gebildeten Schenkels des U-förmig gebogenen Brandschutzelementes 1 anliegt.

Dadurch, dass im ersten Dichtabschnitt 8 die Verstärkungslage 4 beidseitig aufgebracht wird, wird dieser Effekt noch verstärkt, dass das sich ausdehnende intumeszierende Material, die entlang der Materialschwächungsbereiche 10 die Verstärkungslage 4 das sich ausdehnende intumeszierende Material freigibt, so dass es sich in Richtung der Fläche, an der der betreffende Schenkel anliegt, ausdehnt und Druck ausübt.

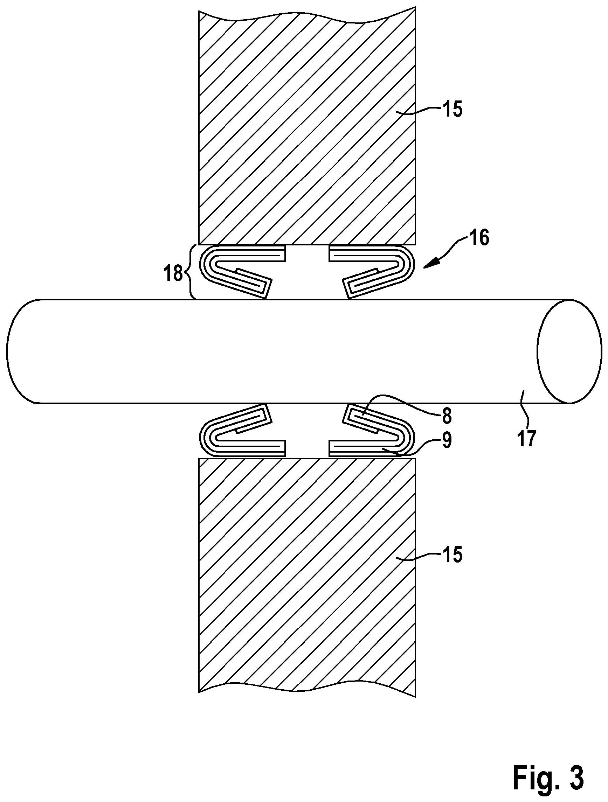

In Figur 3 ist eine Querschnittsdarstellung einer Anordnung des Brandschutzelements 1 in einem Zwischenraum 18 zwischen einer Durchgangsöffnung 16 eines Bauelements 15 und einer durch die Durchgangsöffnung geführten Leitung 17, wie z.B. einer Rohrleitung oder elektrischen Leitung, gezeigt. Es sind zwei Brandschutzelemente 1 im Querschnitt gezeigt, die jeweils eine Stirnseite der Durchgangsöffnung 16 verschließen sollen und dazu die Leitung 17 umgebend in der Durchgangsöffnung 16 angeordnet sind.

Zum Verschließen einer Stirnseite der Durchgangsöffnung 16 wird das Brandschutzelement 1 mit seiner Umklappkante 2 nach außen um die Leitung 17 in den Zwischenraum eingebracht, so dass die Schenkel des U-förmigen Querschnitts des Brandschutzelements 1 an einem Abschnitt der Mantelfläche der Leitung 17 und einem Abschnitt der Innenmantelfläche der Durchgangsöffnung 16 anliegen.

Im vorliegenden Ausführungsbeispiel ist der erste Dichtabschnitt 8 auf der innenliegenden Seite des U-förmigen Querschnitts angeordnet, so dass die Materialschwächungsbereiche 10 im Wesentlichen an der Mantelfläche der Leitung 17 anliegen oder diesem zugewandt sind. Bei Einwirken von Brandwärme erhöht sich das Volumen des intumeszierenden Materials der Innenlage 3 im ersten Dichtungsabschnitt 8, wobei das erhöhte Volumen des intumeszierenden Materials nur Raum zur Ausdehnung durch die Materialschwächungsbereiche 10 findet und somit gegen die Mantelfläche der Leitung 17 im Inneren der Durchgangsöffnung 16 drückt. Dadurch wird erreicht, dass im Brandfall bereits zu Beginn der Ausdehnung des intumeszierenden Materials der Druck auf die Mantelfläche der Leitung 17 erhöht wird und die Leitung 17 bereits frühzeitig nach Ausbruch eines Brandes zusammengedrückt wird, um die Durchgangsöffnung 16 vollständig zu verschließen. Dies ist besonders wirksam in Verbindung mit dem eingebetteten Metallstreifen 11, da dadurch die Brandwärme in den Bereich des ersten Dichtabschnitts 8 transportiert wird. Gleichzeitig bewirkt die Verstärkungslage 4 im Bereich der Umklappkante 2, die die Stirnseite der Durchgangsöffnung 16 nach außen abschließt, dass kein intumeszierendes Material aus der Durchgangsöffnung 16 austritt, wodurch der Druck der Volumenausdehnung des intumeszierenden Materials ins Innere der Durchgangsöffnung 16 gerichtet bleibt, so dass das Zusammendrücken der Leitung 17 unterstützt wird.

### Bezugszeichenliste

- 1: Brandschutzelement
- 2: Umklappkante
- 3: Innenlage
- 4: Verstärkungslage
- 5: Seitliche Kante
- 6: Erste Seite
- 7: Zweite Seite
- 8: Erster Dichtabschnitt
- 9: Zweiter Dichtabschnitt
- 10: Materialschwächungsbereiche
- 11: Metallstreifen
- 15: Bauelement
- 16: Durchgangsöffnung
- 17: Leitung
- 18: Zwischenraum

## Patentansprüche

1. Streifenförmiges Brandschutzelement (1), insbesondere für eine durch eine Durchgangsöffnung (16) eines Bauelements (15) hindurchgeführte Leitung (17), umfassend:
- eine flächige sich in einer Längsrichtung (L) erstreckenden Innenlage (3) mit einem intumeszierenden Material,
- eine Verstärkungslage (4) aus einem Faserverbundmaterial, die auf mindestens einer ersten Flachseite (6) der Innenlage (3) aufgebracht ist und sich in der Längsrichtung (L) des Brandschutzelements (1) erstreckt, wobei die Verstärkungslage (4) die Innenlage (3) zumindest teilweise in einer Breitenrichtung überdeckt, wobei die Verstärkungslage (4) um mindestens einen der seitlichen Ränder der Innenlage (3) auf eine zweite Flachseite (7) umgeschlagen ist, wobei das Brandschutzelement (1) entlang seiner Längsrichtung (L) umgeklappt ist, um eine Umklappkante (2) auszubilden, die außenseitig durch die Verstärkungslage (4) verstärkt ist, und wobei die Verstärkungslage (4) auf der ersten Seite (6) zumindest im ersten Dichtungsabschnitt (8) mit in Breitenrichtung B verlaufenden Materialschwächungsbereichen (10) versehen ist, und wobei im ersten Dichtabschnitt (8) die Verstärkungslage (4) beidseitig aufgebracht ist.

2. Brandschutzelement (1) nach Anspruch 1, wobei die Verstärkungslage (4) die zweite Flachseite der Innenlage (3) teilweise überdeckt.

3. Brandschutzelement (1) nach einem der Ansprüche 1 oder 2, **dadurch gekennzeichnet, dass** das Faserverbundmaterial der Verstärkungslage (4) eine technische Faser aus der Gruppe bestehend aus Glasfaser, Keramikfaser, Carbonfaser, Polyamidfaser, Metallfaser, Aramidfaser, Borfaser, Naturfaser, Steinfaser und Mischungen davon, umfasst.

4. Brandschutzelement (1) nach einem der Ansprüche 1 bis 3, **dadurch gekennzeichnet, dass** das Faserverbundmaterial der Verstärkungslage (4) ein Glasfasermaterial, insbesondere ein Glasfaservlies, Glasfasergelege, Glasfasergewirke oder ein Glasfasergewebe ist.

5. Brandschutzelement (1) nach Anspruch 1, **dadurch gekennzeichnet, dass** die Materialschwächungsbereiche (10) durch Einschnitte, Prägelinien oder Perforierungen gebildet sind.

6. Brandschutzelement (1) nach einem der vorhergehenden Ansprüche, **dadurch gekennzeichnet, dass** das intumeszierende Material ein intumeszierender Schaum, eine intumeszierende Beschichtung oder ein intumeszierender Streifen ist.

7. Brandschutzelement (1) nach einem der vorhergehenden Ansprüche, **dadurch gekennzeichnet, dass** die Verstärkungslage (4) durch Klammern, Kleben, Rakeln, Nieten, Walzen, Schweißen, Extrudieren oder Formschluss mit der Innenschicht (3) verbunden ist.

8. Brandschutzelement (1) nach Anspruch 7, **dadurch gekennzeichnet, dass** die Verstärkungslage (4) auf die mindestens eine Flachseite der Innenlage (3) aufgerakelt ist.

9. Brandschutzelement (1) nach einem der vorhergehenden Ansprüche, **dadurch gekennzeichnet, dass** die Verstärkungslage (4) wenigstens einlagig ausgebildet ist.

10. Brandschutzelement (1) nach einem der vorhergehenden Ansprüche, **dadurch gekennzeichnet, dass** das Faserverbundmaterial eine Temperaturbeständigkeit bis mindestens 500°C hat.

11. Brandschutzelement (1) nach einem der vorhergehenden Ansprüche, **dadurch gekennzeichnet, dass** in der Innenlage (3) ein Metallstreifen (11) vorgesehen ist.

12. Anordnung eines Brandschutzelementes (1) nach einem der vorhergehenden Ansprüche, in einer Durchgangsöffnung (16) eines Bauelements (15), durch die eine Leitung (17) geführt ist, wobei das Brandschutzelement (1) eine Stirnseite der Durchgangsöffnung (16) so verschließt, dass die Umklappkante (2) nach außen weist und Bereiche der Verstärkungslage (4) an der Mantelfläche der Durchgangsöffnung (16) und der Mantelfläche der Leitung (17) anliegen.

## Claims

1. Strip-shaped fire protection element (1), in particular for a line (17) passing through a through-opening (16) of a building element (15), comprising:
- a planar inner layer (3) which extends in a longitudinal direction (L) and consists of an intumescent material;
- a reinforcement layer (4) which is made of a fiber composite material, is applied to at least a first flat side (6) of the inner layer (3) and extends in the longitudinal direction (L) of the fire protection element (1), wherein the reinforcement layer (4) at least partially covers the inner layer (3) in a width direction, wherein the reinforcement layer (4) is folded around at least one of the lateral edges of the inner layer (3) onto a second flat side (7), wherein the fire protection element (1) is folded over in its longitudinal direction (L) to form a folding edge (2) which is reinforced on the outside by the reinforcement layer (4), and wherein the reinforcement layer (4), on the first side (6), is provided, at least in the first sealing portion (8), with material weakening regions (10) which extend in the width direction B, and wherein the reinforcement layer (4) is applied on both sides in the first sealing portion (8).

2. Fire protection element (1) according to claim 1, wherein the reinforcement layer (4) partially covers the second flat side of the inner layer (3).

3. Fire protection element (1) according to either of claims 1 or 2, **characterized in that** the fiber composite material of the reinforcement layer (4) comprises a technical fiber from the group consisting of glass fiber, ceramic fiber, carbon fiber, polyamide fiber, metal fiber, aramid fiber, boron fiber, natural fiber, rock fiber and mixtures thereof.

4. Fire protection element (1) according to any of claims 1 to 3, **characterized in that** the fiber composite material of the reinforcement layer (4) is a glass fiber material, in particular a glass fiber non-woven fabric, glass fiber laid scrim, glass fiber knitted fabric or a glass fiber woven fabric.

5. Fire protection element (1) according to claim 1, **characterized in that** the material weakening regions (10) are formed by incisions, embossing lines or perforations.

6. Fire protection element (1) according to any of the preceding claims, **characterized in that** the intumescent material is an intumescent foam, an intumescent coating or an intumescent strip.

7. Fire protection element (1) according to any of the preceding claims, **characterized in that** the reinforcement layer (4) is connected to the inner layer (3) by clamping, gluing, squeegeeing, riveting, rolling, welding, extruding or form-fitting.

8. Fire protection element (1) according to claim 7, **characterized in that** the reinforcement layer (4) is squeegeed onto the at least one flat side of the inner layer (3).

9. Fire protection element (1) according to any of the preceding claims, **characterized in that** the reinforcement layer (4) is at least one layer.

10. Fire protection element (1) according to any of the preceding claims, **characterized in that** the fiber composite material has a temperature resistance of at least 500°C.

11. Fire protection element (1) according to any of the preceding claims, **characterized in that** a metal strip (11) is provided in the inner layer (3).

12. Arrangement of a fire protection element (1) according to any of the preceding claims in a through-opening (16) of a building element (15), through which through-opening a line (17) is guided, wherein the fire protection element (1) closes an end face of the through-opening (16) such that the folding edge (2) points outward and regions of the reinforcement layer (4) are in contact with the lateral surface of the through-opening (16) and the lateral surface of the line (17).

## Revendications

1. Élément de protection contre l'incendie (1) en forme de bande, en particulier pour une conduite (17) traversant une ouverture de passage (16) d'un élément de construction (15), comprenant :
- une couche intérieure (3) plane s'étendant dans une direction longitudinale (L) et comportant un matériau intumescent ;
- une couche de renforcement (4) en un matériau composite fibreux qui est appliquée sur au moins un premier côté plat (6) de la couche intérieure (3) et s'étend dans la direction longitudinale (L) de l'élément de protection contre l'incendie (1), dans lequel la couche de renforcement (4) recouvre la couche intérieure (3) au moins partiellement dans une direction de la largeur, dans lequel la couche de renforcement (4) est rabattue autour d'au moins l'un des bords latéraux de la couche intérieure (3) sur un second côté plat (7), dans lequel l'élément de protection contre l'incendie (1) est rabattu le long de sa direction longitudinale (L) pour former un bord rabattu (2) qui est renforcé côté extérieur par la couche de renforcement (4), et dans lequel la couche de renforcement (4) est pourvue sur le premier côté (6), au moins dans la première section d'étanchéité (8), de zones d'affaiblissement de matériau (10) s'étendant dans la direction de la largeur B, et dans lequel la couche de renforcement (4) est appliquée des deux côtés dans la première section d'étanchéité (8).

2. Élément de protection contre l'incendie (1) selon la revendication 1, dans lequel la couche de renforcement (4) recouvre partiellement le second côté plat de la couche intérieure (3).

3. Élément de protection contre l'incendie (1) selon l'une des revendications 1 ou 2, **caractérisé en ce que** le matériau composite fibreux de la couche de renforcement (4) comprend une fibre technique choisie dans le groupe constitué de fibre de verre, fibre céramique, fibre de carbone, fibre de polyamide, fibre métallique, fibre d'aramide, fibre de bore, fibre naturelle, fibre de pierre et leurs mélanges.

4. Élément de protection contre l'incendie (1) selon l'une des revendications 1 à 3, **caractérisé en ce que** le matériau composite fibreux de la couche de renforcement (4) est un matériau en fibres de verre, en particulier un non-tissé en fibres de verre, un tissu stratifil en fibres de verre, un tricot en fibres de verre ou un tissu en fibres de verre.

5. Élément de protection contre l'incendie (1) selon la revendication 1, **caractérisé en ce que** les zones d'affaiblissement de matériau (10) sont formées par des entailles, des lignes de gaufrage ou des perforations.

6. Élément de protection contre l'incendie (1) selon l'une des revendications précédentes, **caractérisé en ce que** le matériau intumescent est une mousse intumescente, un revêtement intumescent ou une bande intumescente.

7. Élément de protection contre l'incendie (1) selon l'une des revendications précédentes, **caractérisé en ce que** la couche de renforcement (4) est reliée à la couche intérieure (3) par agrafage, collage, application par raclage, rivetage, laminage, soudage, extrusion ou complémentarité de forme.

8. Élément de protection contre l'incendie (1) selon la revendication 7, **caractérisé en ce que** la couche de renforcement (4) est appliquée par raclage sur l'au moins un côté plat de la couche intérieure (3).

9. Élément de protection contre l'incendie (1) selon l'une des revendications précédentes, **caractérisé en ce que** la couche de renforcement (4) est formée au moins en une seule couche.

10. Élément de protection contre l'incendie (1) selon l'une des revendications précédentes, **caractérisé en ce que** le matériau composite fibreux possède une résistance à la température allant jusqu'à au moins 500 °C.

11. Élément de protection contre l'incendie (1) selon l'une des revendications précédentes, **caractérisé en ce qu'**une bande métallique (11) est prévue dans la couche intérieure (3).

12. Agencement d'un élément de protection contre l'incendie (1) selon l'une des revendications précédentes dans une ouverture de passage (16) d'un élément de construction (15) à travers laquelle est guidée une conduite (17), dans lequel l'élément de protection contre l'incendie (1) ferme un côté frontal de l'ouverture de passage (16) de telle sorte que le bord rabattu (2) est orienté vers l'extérieur et que des zones de la couche de renforcement (4) s'appuient contre la surface d'enveloppe de l'ouverture de passage (16) et la surface d'enveloppe de la conduite (17).
